# FASCICULE DE BREVET EUROPEEN

(11) **EP 1 484 216 B1**
(45) Date de publication et mention de la délivrance du brevet: **12.04.2006**
(21) Numéro de dépôt: 04291159.4
(22) Date de dépôt: 05.05.2004
(51) Int. Cl.: B60Q 1/04

(54) **Ensemble de bloc-avant de véhicule automobile comportant des moyens d'auto-ajustement de la position des blocs optiques, platine amovible de réglage prévue à cet effet, et procédé de montage d'un tel bloc avant**
Frontmodul für ein Fahrzeug mit Mitteln zur Selbstjustierung der Position der Beleuchtungseinheiten und zu diesem Zwecke vorgesehener abnehmbarer Einstellplatine, und Montageverfahren für ein solches Frontmodul
Front module for vehicle with optical blocks position self-adjusting means provided with removable adjustment platinum and method for mounting thereof

(30) Priorité: 02.06.2003 FR 0306641
(43) Date de publication de la demande: 08.12.2004
(73) Titulaire: Faurecia Bloc Avant, 92000 Nanterre (FR)
(72) Inventeur: Lazzeroni, Eric, 73642 Welzhein (DE)
(74) Mandataire: Hadjadj, Laurent

(56) Documents cités:
- EP-A- 1 048 520
- EP-A- 1 232 932
- FR-A- 2 736 015

## Description

La présente invention concerne un ensemble de bloc-avant de véhicule automobile comprenant une face avant, qui présente une partie centrale et deux parties latérales, une peau de pare-chocs, deux poutres flexibles s'étendant latéralement et formant des supports de la peau de pare-chocs, dont chacune a une première extrémité reliée à la partie centrale et une deuxième extrémité destinée à être reliée à une partie avant d'aile de carrosserie du véhicule, et deux blocs optiques, dont chacun est fixé rigidement à une poutre respective.

Un tel ensemble est par exemple décrit dans le document EP-A-1 232 932.

La structure décrite dans ce document permet un positionnement automatique et permanent des contours visibles des blocs optiques par rapport aux extrémités d'ailes correspondantes et à la peau de pare-chocs. Dans le même temps, cette structure assure un positionnement relatif précis des extrémités d'aile et de la peau de pare-chocs.

Il peut également être souhaitable, pour améliorer les qualités esthétiques du véhicule, d'assurer une continuité d'aspect des blocs optiques et de la peau de pare-chocs avec d'autres éléments de carrosserie, tels que le capot du véhicule.

L'invention a pour but de fournir un bloc-avant sous la forme d'un module pré-assemblé, dont les éléments d'aspect, constitués par les blocs optiques et la peau de pare-chocs, peuvent être automatiquement réglés et bloqués en position, pour assurer une continuité d'aspect avec des éléments de carrosserie tels que le capot, après montage du module sur la caisse du véhicule.

A cet effet, dans un ensemble de bloc-avant selon l'invention, la première extrémité de la poutre est reliée à la partie centrale par l'intermédiaire de moyens de pré-positionnement et de blocage, qui sont adaptés pour assurer d'une part un pré-positionnement autorisant un déplacement sensiblement axial de ladite première extrémité par rapport à la face avant, et d'autre part un blocage en position de ladite première extrémité par rapport à la face avant, et
la poutre présente des moyens de déplacement aptes à coopérer avec des moyens de déplacement complémentaires prévus sur une partie de capot-moteur du véhicule, de sorte que, lorsque la première extrémité est pré-positionnée mais non bloquée en position, un mouvement de fermeture du capot peut provoquer un déplacement de la première extrémité par rapport à la face avant, et ainsi un ajustement de la position du bloc optique et de la peau de pare-chocs par rapport au capot.

Suivant d'autres caractéristiques de l'invention :
- lesdits moyens de pré-positionnement et de blocage comprennent un manchon tubulaire solidaire de la face avant, et un doigt complémentaire coaxial prévu sur la poutre, et susceptible de coulissement axial dans ledit manchon ;
- lesdits moyens de pré-positionnement et de blocage comprennent une paroi de butée en saillie radiale du manchon, et une paroi de butée en saillie radiale du doigt, pouvant coopérer ensemble pour limiter l'engagement du doigt dans le manchon et définir la pré-position de la première extrémité de la poutre par rapport à la face avant ;
- la paroi de butée radiale du doigt présente une surface de came apte à coopérer avec un poussoir solidaire du capot, de sorte que ladite paroi définit lesdits moyens de déplacement de la poutre ;
- lesdits moyens de pré-positionnement et de blocage comprennent un organe déformable, tel qu'un rivet à collerette à déformation plastique, apte à autoriser un coulissement axial du doigt dans le manchon, et à se déformer sous l'action d'un appui correspondant du capot lors de la fermeture de ce dernier, de façon à empêcher le retour à la pré-position de la première extrémité par rapport à la face avant ; et
- lesdits moyens de pré-positionnement et de blocage comprennent un organe de fixation rigide du doigt dans lé manchon, tel qu'un ensemble vis/écrou, pouvant assurer le blocage en position du doigt de la première extrémité de la poutre par rapport à la face avant.

L'invention a également pour objet une platine d'ajustement de la position d'un bloc optique et d'une peau de pare-chocs d'un ensemble de bloc avant tel que décrit précédemment, destinée à être fixée à une partie de capot du véhicule, caractérisée en ce qu'elle comporte des moyens de déplacement complémentaires des moyens de déplacement prévus sur la poutre de l'ensemble de bloc-avant.

Suivant des caractéristiques optionnelles de la platine selon l'invention :
- la platine comprend des moyens de fixation détachables audit capot ; et
- la platine comprend des moyens d'appui destinés à coopérer avec un organe déformable des moyens de pré-positionnement et de blocage de l'ensemble de bloc-avant lors de la fermeture du capot, et prévus pour déformer ledit organe déformable pour empêcher le retour de la première extrémité de poutre de sa position de blocage à sa pré-position, par rapport à la face avant.

L'invention vise enfin un procédé d'assemblage d'un ensemble de bloc-avant tel que décrit précédemment, et de montage d'un tel ensemble de bloc-avant sur une caisse de véhicule automobile, dans lequel on réalise successivement les étapes suivantes :
- on monte chaque bloc optique sur la poutre respective ;
- on pré-positionne chaque poutre au niveau de sa première extrémité sur la face avant et on fixe la peau de pare-chocs sur l'ensemble ainsi obtenu ;
- on monte l'ensemble de bloc avant ainsi obtenu sur la caisse du véhicule, et on fixe chaque poutre par sa deuxième extrémité à la partie avant d'aile respective ;
- on monte, sur la face interne du capot, une ou des platine(s) de réglage telle(s) que décrite(s) précédemment ;
- on ferme le capot de façon à provoquer un éventuel déplacement de la première extrémité par rapport à la face avant, et ainsi un ajustement de la position du bloc optique et de la peau de pare-chocs par rapport au capot ;
- on ouvre le capot ;
- on bloque en position la première extrémité de chaque poutre par rapport à la face avant ; et
- on démonte la ou les platine(s) de réglage.

Un mode de réalisation de l'invention va maintenant être décrit plus en détail en se référant aux dessins annexés, sur lesquels :
- les Figures 1 et 2 sont des vues éclatées en perspective avant, suivant des directions différentes, d'une partie d'un ensemble de bloc avant suivant l'invention, d'une partie avant d'aile de carrosserie correspondante, et d'une partie de capot ;
- la Figure 3 est une vue schématique de détail, à plus grande échelle, d'une poutre et d'un manchon respectif, illustrant le montage de la poutre sur la face avant ; et
- la Figure 4 est une vue schématique en coupe dans un plan vertical axial du doigt de première extrémité de la poutre pré-positionnée dans le manchon respectif, et du capot équipé d'une platine de réglage selon l'invention, le capot étant partiellement ouvert.

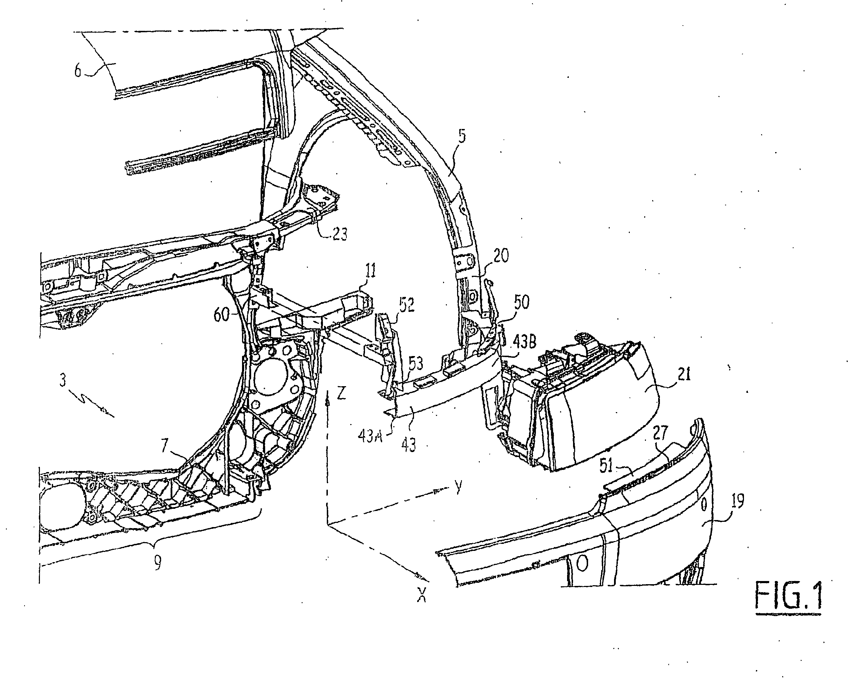

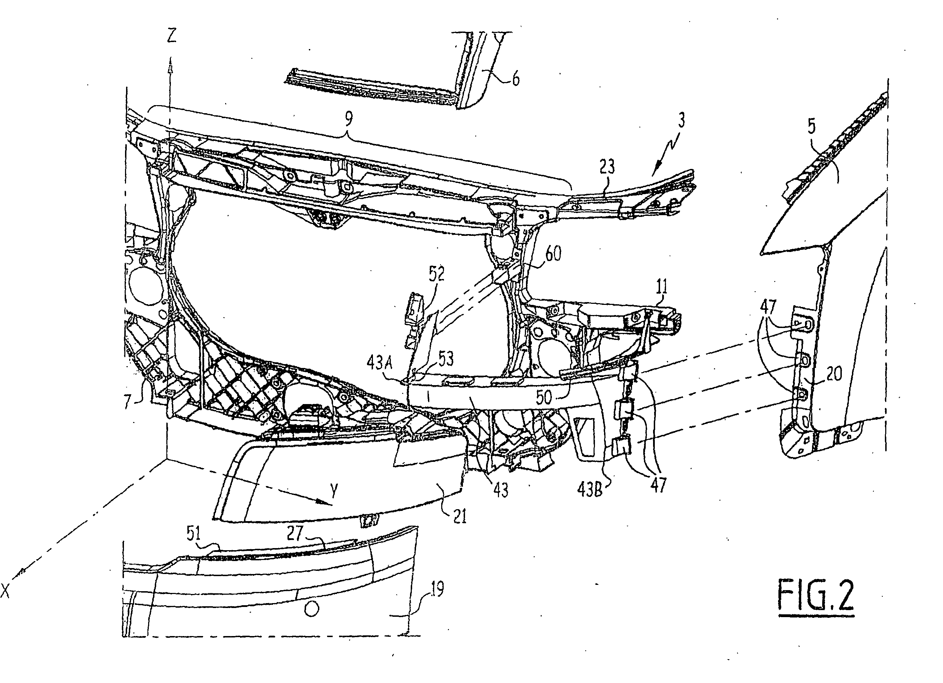

Sur les Figures 1 et 2, on a représenté une partie avant d'un véhicule automobile, comprenant un ensemble de bloc-avant 3 (représenté partiellement), une extrémité avant 5 d'une aile de carrosserie, et une extrémité avant 6 d'un capot.

On a orienté ces Figures 1 et 2, ainsi que les Figures suivantes 3 et 4, suivant trois axes X, Y, Z qui correspondent à l'orientation usuelle du véhicule, à savoir respectivement l'axe longitudinal X orienté dans la direction de marche avant, l'axe transversal Y orienté de droite à gauche, du point de vue du conducteur, et l'axe vertical Z orienté de bas en haut. Tous les termes utilisés dans la suite de la description, pouvant indiquer un sens ou un positionnement, doivent être compris en référence à ce système d'axes.

La partie avant de véhicule représentée sur les Figures 1 et 2 est symétrique ou quasi-symétrique par rapport à un plan médian vertical du véhicule. Pour plus de clarté, on n'a représenté sur ces Figures et on ne décrira que la portion située du côté gauche du véhicule.

L'ensemble de bloc-avant 3 du véhicule, ou plus simplement « bloc-avant », comporte une structure essentiellement rigide constituée par une face avant 7, laquelle présente une partie centrale 9 et une partie latérale 11.

Le bloc-avant 3 comporte en outre une peau de pare-chocs 19, réalisée par exemple d'une pièce de matériau plastique, est disposée sur toute la largeur de la face avant 7, en dépassant latéralement des parties latérales 11 de la face avant, et en s'appliquant sur un bord de l'extrémité avant d'aile 5, en coïncidence avec celui-ci. Le bloc avant 3 comporte de plus, de chaque côté latéral, un bloc optique 21 monté sur la face avant dans des formes complémentaires, sous un bord supérieur 23 de cette dernière, et au-dessus d'un bord supérieur 27 de la peau de pare-chocs 19.

Le bloc avant 3 comporte par ailleurs, de chaque côté latéral, une poutre galbée 43 s'étendant essentiellement latéralement dans la direction de la peau de pare-chocs 19. Cette poutre galbée 43 a une première extrémité 43A reliée à la partie centrale 9 de la face avant, par l'intermédiaire de moyens de pré-positionnement et de blocage complémentaires qui seront détaillés par la suite, et une deuxième extrémité 43B fixée rigidement au bord 20 de la partie avant d'aile, par des moyens d'accrochage complémentaires 47.

La poutre 43 est flexible dans la mesure où, lorsque la deuxième extrémité 43B est fixée sur le bord 20, la première extrémité 43A est susceptible de débattement par déformation élastique de la poutre 43, et dans la mesure où la poutre 43 peut ainsi se déformer sans déformation sensible de la partie d'aile. En outre, la rigidité à la flexion de la face avant 7 est très supérieure à celle de la poutre 43.

Sur une partie supérieure de la poutre 43 est formée une gouttière 50 qui s'étend transversalement, suivant la direction générale de la poutre 43. Cette gouttière 50 reçoit un volet 51 formé en saillie du bord supérieur 27 de la peau de pare-chocs 19, de façon à réaliser un accrochage de la peau de pare-chocs 19 sur la poutre 43, avec possibilité de mouvements relatifs d'ajustement suivant la direction générale de la poutre 43.

La poutre 43 est adaptée pour supporter le bloc optique 21 respectif. A cet effet, la poutre 43 est pourvue de faces planes verticales d'appui 52, 53, tournées vers la deuxième extrémité 43B, ou extrémité extérieure, de la poutre 43, et destinées à coopérer avec des bossages correspondants en saillie vers l'extérieur du bloc optique 21, de façon que ce dernier soit positionné avec précision par rapport à la poutre 43 selon la direction Y. La fixation rigide du bloc optique 21 sur la poutre 23 est assurée par des moyens de blocage (non représentés) tels que des paires vis/écrous.

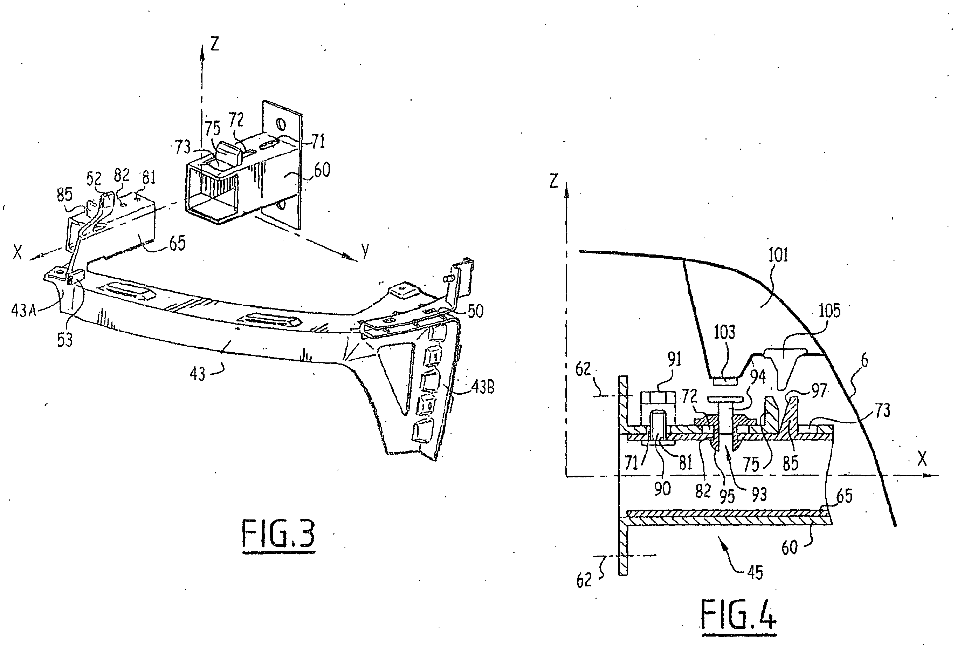

On se réfère à présent aux Figures 3 et 4 pour décrire avec plus de précision les moyens de pré-positionnement et de blocage.

On notera que, sur la Figure 3, la forme de la partie de poutre 43 qui présente la face d'appui verticale 52 a été nettement simplifiée, pour plus de clarté de_la Figure.

Ces moyens 45 comportent un manchon creux 60 de section rectangulaire, fixé rigidement par des moyens de fixation 62 à la partie centrale 9 de la face avant, de façon à faire saillie de cette dernière vers l'avant, suivant son axe longitudinal orienté sensiblement suivant l'axe longitudinal du véhicule X. En réalité, l'axe du manchon pourra éventuellement être décalé angulairement par rapport à l'axe X.

Les moyens de pré-positionnement et de blocage comprennent en outre, formé en saillie vers l'arrière de l'extrémité 43A de la poutre, un doigt 65 de forme extérieure complémentaire de la surface intérieure du manchon 60, de façon à pouvoir s'engager coaxialement dans ce dernier. Le doigt 65 se présente également sous une forme de manchon tubulaire de section rectangulaire.

Le manchon 60 est formé avec un premier trou oblong traversant 71 ménagé dans sa paroi supérieure, ce trou 71 étant allongé suivant la direction X de l'axe du manchon 60. Sur cette même face supérieure du manchon 60 sont aussi formés d'une part d'un deuxième trou oblong traversant 72, décalé axialement vers l'avant par rapport au trou oblong 71, et d'autre part une fenêtre rectangulaire traversante 73, décalée axialement vers l'avant par rapport au trou oblong 72. La paroi supérieure du manchon 60 est solidaire d'une plaquette 75, qui fait saillie vers le haut à partir du bord arrière de la fenêtre 73.

De façon correspondante, le doigt 65 est pourvu, sur sa face supérieure, d'un premier trou circulaire 81 traversant, d'un deuxième trou circulaire 82, et d'une languette 85 en saillie vers le haut. Les trous circulaires 81, 82 sont disposés de façon qu'ils puissent être placés au droit respectivement du premier trou oblong 71 et du deuxième trou oblong 72, lorsque le doigt 65 est engagé dans le manchon 60. De la même façon, la languette 85 est prévue pour pouvoir s'insérer dans la fenêtre rectangulaire 73 et venir en butée sur un bord ou une surface de la plaquette 75.

Les moyens de pré-positionnement et de blocage comprennent d'autre part des moyens permettant de solidariser, de façon définitive (avec possibilité de démontage) comme on le verra plus loin, le doigt 65 et le manchon 60. Ces moyens de solidarisation comprennent par exemple une paire vis/écrous 90, 91, dont la vis peut s'engager dans le trou oblong 71 et le trou circulaire 81, et un organe déformable tel qu'un « plasti-rivet » 93 placé au travers du trou oblong 72 et du trou circulaire 82. Un tel organe déformable 93. comprend un pion ou rivet 94 et une collerette déformable 95, prévus pour que le pion 94 puisse s'enfoncer dans la collerette 95 en la déformant plastiquement, sous l'effet d'un appui vertical sur la tête du pion.

Sur la Figure 4, on a représenté les moyens de pré-positionnement et de blocage dans leur configuration pré-positionnée, que l'on appellera « pré-position ». Dans cette configuration, le doigt 65 est engagé dans le manchon 60, et inséré au maximum dans ce dernier, la languette 85 venant en butée sur la plaquette 75. La vis 90 est alors solidaire du doigt 65, et sa tige fait saillie au travers des trous 71, 81. L'organe déformable 93 est engagée dans les trous 72, 82, le pion 94 faisant saillie de la collerette 95 vers le haut.

On comprend,que dans cette pré-position, le doigt 65 est susceptible de coulissement axial dans le manchon 60, vers l'avant, selon une course limitée par les dimensions des trous oblongs 71, 72 et de la fenêtre 73.

Dans cette pré-position, les surfaces en regard de la plaquette 75 et de la languette 85 forment ensemble une encoche sensiblement en V, ouverte vers le haut, les deux faces en regard présentant des surfaces inclinées. La surface inclinée 97 de la languette 85 forme une came destinée à coopérer avec un poussoir de came dont l'appui génère un déplacement vers l'avant du doigt 65 dans le manchon 60. Ainsi la languette 85 définit-elle avec sa surface de came 97 un moyen de déplacement du doigt 65.

La partie avant de capot 6 est munie, aux fins d'ajustement de la position relative de l'extrémité 43A de la poutre 43 et de la face avant 7, d'une platine 101 fixée de façon amovible sur la face intérieure de la partie avant de capot 6. A cet effet, la platine 101 comporte des moyens de fixation détachables (non représentés) sur le capot 6. Comme il sera vu ultérieurement, la platine 101 est montée sur le capot 6, sur la chaîne de montage du véhicule, et démontée après ajustement de la position relative de l'extrémité de poutre 43A et de la face avant 7, et blocage définitif dans la position ajustée.

La platine 101 comprend une touche 103 disposée de façon à porter sur la tête du pion 94 lors de la fermeture du capot, et à enfoncer ce pion 94 dans la collerette 95; de façon à déformer cette dernière et à faire fluer sa matière constitutive dans le trou oblong 72.

La platine 101 est en outre pourvue d'une dent 105 en saillie tournée vers le bas, formant poussoir pour la came 97. Cette dent 105 est disposée de façon que, lors de la fermeture du capot 6, elle s'engage dans l'encoche formée par la plaquette 75 et la languette 85, en déplaçant éventuellement le doigt 65 dans le manchon 60 vers l'avant. La dent 105 est positionnée de façon précise par rapport au capot de façon à constituer une référence de la position du capot, lorsque ce dernier est fermé.

Il est bien entendu qu'il faut prévoir une touche 103 et une dent 105 pour chacune des liaisons des deux poutres respectives 43 à la face avant 7. Il est donc possible de prévoir deux platines 101, dont chacune est montée latéralement à l'intérieur du capot 6. De façon alternative, il est également possible de prévoir une platine unique 101 supportant les deux touches 103 et les deux dents 105.

On va à présent décrire plus précisément les opérations principales d'assemblage du bloc avant dont la structure a été décrite précédemment, ainsi que les opérations principales de montage de ce bloc avant sur la caisse du véhicule, et les opérations permettant d'ajuster la position relative de l'extrémité 43A de la poutre par rapport à la face avant 7, et ainsi l'ajustement de la position du bloc optique 21 par rapport aux parties visibles du capot.

Dans une première étape du procédé de montage du bloc avant, on pré-positionne chaque bloc optique 21 sur la poutre 43. Les vis de fixation du bloc optique 21 sur la poutre 23 sont mises en position mais non serrées. On réalise un premier centrage extérieur du bloc optique sur la poutre 43 par appui d'une nervure réalisée dans la glace du bloc optique 21. On réalise ensuite le centrage ou positionnement intérieur du bloc optique 21 par appui des bossages issus de la glace du bloc optique sur les surfaces d'appui 52, 53.

L'ensemble optique ainsi obtenu, constitué d'un bloc optique 21 monté sur sa poutre 23, est ensuite placé sur un gabarit de montage, sur lequel est préalablement positionnée la face avant suivant des points de référence correspondant à des points de positionnement sur la carrosserie. Sur le gabarit de montage, on met en place chaque ensemble optique, en positionnant la deuxième extrémité 43B de la poutre 43 dans la forme simulant la position théorique de l'aile, et en positionnant la première extrémité 43A de la poutre 43 dans la forme simulant la position théorique du capot.

L'ensemble est ensuite bridé.

On fixe ensuite le manchon 60 rigidement sur la face avant 7.

On fixe ensuite rigidement chaque bloc optique 21 sur la poutre correspondante 43 au moyen des paires vis/écrous.

Le module ainsi constitué de la face avant et des ensembles optiques est placé sur une « balancelle de montage », sur laquelle est réalisée la mise en place de la peau de pare-chocs 19, par vissage sur la face avant 9 et clipage dans la gouttière 50 des poutres 43.

Le module ainsi obtenu peut être conditionné et transporté sur une chaîne d'assemblage du véhicule.

Dans une opération suivante, on présente le module précédemment obtenu en regard de la caisse du véhicule, à l'aide d'un préhenseur. Ce préhenseur est mis en référence sur les doublures d'aile et sur les points d'isostatisme de la face avant. Les blocs optiques 21, la peau de pare-chocs 19, et les poutres 43 prennent alors leurs positions relatives adéquates suivant les axes Y et Z.

Cet ensemble est fixé sur le retour d'aile, notamment par la deuxième extrémité 43B des poutres sur les bords avant d'aile 20.

On fixe ensuite, par vissage, la face avant sur les platines de longerons et les doublures d'aile.

Après retrait du préhenseur, un opérateur met en place, sur le capot, les platines amovibles 101 droite et gauche, pourvues de leurs touches 103 et dents 105 respectives.

Pour ajuster la position de l'extrémité 43A des poutres vis-à-vis de la face avant, et ainsi ajuster la position de chaque bloc optique 21 par rapport au contour avant du capot 6, l'opérateur ferme le capot.

On comprend que la fermeture du capot provoque, avec un léger décalage dans le temps, successivement le déplacement vers l'avant vers sa position définitive du doigt 65 dans le manchon 60, par appui de la dent 105 sur la came 97, et condamnation de cette position définitive par déformation de l'organe déformable 93 dans le trou oblong 72, sous l'effet de l'appui de la touche 103 sur la tête du pion 94.

L'opérateur ouvre ensuite le capot, visse la paire vis/écrou 90, 91 de façon à bloquer de façon définitive le doigt 65 dans le manchon 60 dans leur position relative ajustée.

L'opérateur retire ensuite les platines 101 du capot, ces platines pouvant être réutilisées pour une opération analogue ultérieure sur un autre véhicule de même type.

Il est nettement préférable que les platines 101 soient amovibles et non pas prévues comme des parties intégrantes du capot, de façon que des manoeuvres ultérieures du capot par l'utilisateur du véhicule ne produisent pas d'interférence entre les parties saillantes 103, 105 des platines et les liaisons poutre 43/face avant 7, matérialisées par les moyens de pré-positionnement et de blocage 60, 65.

## Revendications

1. Ensemble de bloc-avant de véhicule automobile comprenant une face avant (7), qui présente une partie centrale (9) et deux parties latérales (11), une peau de pare-chocs (19), deux poutres flexibles (43) s'étendant latéralement et formant des supports de la peau de pare-chocs (19), dont chacune a une première extrémité (43A) reliée à la partie centrale (9) et une deuxième extrémité (43B) destinée à être reliée à une partie avant (5) d'aile de carrosserie du véhicule, et deux blocs optiques (21), dont chacun est fixé rigidement à une poutre respective (43),
**caractérisé en ce que** la première extrémité (43A) de la poutre est reliée à la partie centrale (9) par l'intermédiaire de moyens (60, 65) de pré-positionnement et de blocage, qui sont adaptés pour assurer d'une part un pré-positionnement autorisant un déplacement sensiblement axial (X) de ladite première extrémité (43A) par rapport à la face avant (7), et d'autre part un blocage en position de ladite première extrémité (43A) par rapport à la face avant (7),
et **en ce que** la poutre (43) présente des moyens de déplacement (85) aptes à coopérer avec des moyens de déplacement complémentaires (105) prévus sur une partie de capot-moteur (6) du véhicule, de sorte que, lorsque la première extrémité, (43A) est pré-positionnée mais non bloquée en position, un mouvement de fermeture du capot (6) peut provoquer un déplacement de la première extrémité (43A) par rapport à la face avant (7), et ainsi un ajustement de la position du bloc optique (21) et de la peau de pare-chocs (19) par rapport au capot (6).

2. Ensemble de bloc-avant suivant la revendication 1, **caractérisé en ce que** lesdits moyens (60, 65) de pré-positionnement et de blocage comprennent un manchon tubulaire (60) solidaire de la face avant (7), et un doigt (65) complémentaire coaxial prévu sur la poutre (43), et susceptible de coulissement axial (X) dans ledit manchon (60).

3. Ensemble de bloc-avant suivant la revendication 2, **caractérisé en ce que** lesdits moyens (60, 65) de pré-positionnement et de blocage comprennent une paroi de butée (75) en saillie radiale du manchon (60), et une paroi de butée (85) en saillie radiale du doigt (65), pouvant coopérer ensemble pour limiter l'engagement du doigt (65) dans le manchon (60) et définir la pré-position de la première extrémité (43A) de la poutre par rapport à la face avant (7).

4. Ensemble de bloc-avant suivant la revendication 3, **caractérisé en ce que** la paroi de butée radiale (85) du doigt (65) présente une surface de came (97) apte à coopérer avec un poussoir (105) solidaire du capot (6), de sorte que ladite paroi (85) définit lesdits moyens de déplacement de la poutre (43).

5. Ensemble de bloc-avant suivant la revendication 3 ou 4, **caractérisé en ce que** lesdits moyens (60, 65) de pré-positionnement et de blocage comprennent un organe déformable (93), tel qu'un rivet à collerette à déformation plastique, apte à autoriser un coulissement axial (X) du doigt (65) dans le manchon (60), et à se déformer sous l'action d'un appui correspondant (103) du capot (6) lors de la fermeture de ce dernier, de façon à empêcher le retour à la pré-position de la première extrémité (43A) par rapport à la face avant (7).

6. Ensemble de bloc-avant suivant l'une quelconque des revendications 2 à 5, **caractérisé en ce que** lesdits moyens (60, 65) de pré-positionnement et de blocage comprennent un organe (90, 91) de fixation rigide du doigt (65) dans le manchon (60), tel qu'un ensemble vis/écrou, pouvant assurer le blocage en position du doigt (65) de la première extrémité (43A) de la poutre par rapport à la face avant (7).

7. Platine (101) d'ajustement de la position d'un bloc optique et d'une peau de pare-chocs d'un ensemble de bloc avant selon l'une quelconque des revendications 1 à 6, destinée à être fixée à une partie (6) de capot du véhicule, **caractérisée en ce qu'**elle comporte des moyens de déplacement (105) complémentaires des moyens de déplacement (85) prévus sur la poutre (43) de l'ensemble de bloc-avant (3).

8. Platine suivant la revendication 7, **caractérisée en ce qu'**elle comprend des moyens de fixation détachables audit capot (6).

9. Platine suivant la revendication 7 ou 8, **caractérisée en ce qu'**elle comprend des moyens d'appui (103) destinés à coopérer avec un organe déformable (93) des moyens (60, 65) de pré-positionnement et de blocage de l'ensemble de bloc-avant lors de la fermeture du capot (6), et prévus pour déformer ledit organe déformable (93) pour empêcher le retour de la première extrémité (43A) de poutre de sa position de blocage à sa pré-position, par rapport à la face avant (7).

10. Procédé d'assemblage d'un ensemble de bloc- avant selon l'une quelconque des revendications 1 à 6 et de montage d'un tel ensemble de bloc-avant sur une caisse de véhicule automobile, dans lequel on réalise successivement les étapes suivantes :
- on monte chaque bloc optique (21) sur la poutre (43) respective ;
- on pré-positionne chaque poutre (43) au niveau de sa première extrémité (43A) sur la face avant (7) et on fixe la peau de pare-chocs (19) sur l'ensemble ainsi obtenu ;
- on monte l'ensemble de bloc avant ainsi obtenu sur la caisse du véhicule, et on fixe chaque poutre (43) par sa deuxième extrémité (43B) à la partie avant d'aile (5) respective ;
- on monte, sur la face interne du capot (6), une ou des platine(s) de réglage (101) selon l'une quelconque des revendications 7 à 9 ;
- on ferme le capot (6) de façon à provoquer un éventuel déplacement de la première extrémité (43A) par rapport à la face avant (7), et ainsi un ajustement de la position du bloc optique (21) et de la peau de pare-chocs (19) par rapport au capot (6);
- on ouvre le capot (6);
- on bloque en position la première extrémité (43A) de chaque poutre (43) par rapport à la face avant (7); et
- on démonte la ou les platine(s) de réglage (101).

## Claims

1. Motor vehicle front-unit assembly comprising a front face (7), which has a central part (9) and two lateral parts (11), a bumper skin (19), two flexible beams (43) extending laterally and forming supports for the bumper skin (19), each of which has a first end (43A) connected to the central part (9) and a second end (43B) intended to be connected to a front part (5) of the vehicle body wing, and two optical units (21), each of which is fixed rigidly to a respective beam (43),
**characterised in that** the first end (43A) of the beam is connected to the central part (9) by pre-positioning and locking means (60, 65), which are adapted to ensure on the one hand a pre-positioning allowing a substantially axial movement (X) of the said first end (43A) with respect to the front face (7), and on the other hand a locking of the said first end (43A) in position with respect to the front face (7),
and **in that** the beam (43) has movement means (85) able to cooperate with complementary movement means (105) provided on an engine bonnet part (6) of the vehicle, so that, when the first end (43A) is pre-positioned but not locked in position, a closure movement of the bonnet (6) can cause a movement of the first end (43A) with respect to the front face (7), and thus an adjustment of the position of the optical unit (21) and of the bumper skin (19) with respect to the bonnet (6).

2. Front-unit assembly according to claim 1,
**characterised in that** the said pre-positioning and locking means (60, 65) comprise a tubular sleeve (60) secured to the front face (7), and a complementary coaxial finger (65) provided on the beam (43), and capable of axial sliding (X) in the said sleeve (60).

3. Front-unit assembly according to claim 2,
**characterised in that** the said pre-positioning and locking means (60, 65) comprise a stop wall (75) projecting radially from the sleeve (60), and a stop wall (85) radially projecting from the finger (65), able to cooperate together in order to limit the engagement of the finger (65) in the sleeve (60) and to define the preliminary position of the first end (43A) of the beam with respect to the front face (7).

4. Front-unit assembly according to claim 3,
**characterised in that** the radial stop wall (85) of the finger (65) has a cam surface (97) able to cooperate with a pusher (105) secured to the bonnet (6)., so that the said wall (85) defines the said movement means of the beam (43).

5. Front-unit assembly according to claim 3 or 4,
**characterised in that** the said pre-positioning and locking means (60, 65) comprise a deformable member (93), such as a rivet with a collar with plastic deformation, able to allow an axial sliding (X) of the finger (65) in the sleeve (60), and to deform under the action of a corresponding support (103) on the bonnet (6) when the latter is closed, so as to prevent the return of the first end (43A) to the preliminary position with respect to the front face (7) .

6. Front-unit assembly according to any one of claims 2 to 5, **characterised in that** the said pre-positioning and locking means (60, 65) comprise a member (90, 91) for rigid fixing of the finger (65) in the sleeve (60), such as a screw/nut assembly, able to provide the locking in position of the finger (65) on the first end (43A) of the beam with respect to the front face (7).

7. Plate (101) for adjusting the position of an optical unit and of a bumper skin of a front-unit assembly according to any one of claims 1 to 6, intended to be fixed to a part (6) of the vehicle bonnet, **characterised in that** it comprises movement means (105) complementary to the movement means (85) provided on the beam (43) of the front-unit assembly (3).

8. Plate according to claim 7, **characterised in that** it comprises means of detachable fixing to the said bonnet (6).

9. Plate according to claim 7 or 8, **characterised in that** it comprises support means (103) intended to cooperate with a deformable member (93) of the means (60, 65) for pre-positioning and locking the front-unit assembly when the bonnet (6) is closed, and designed to deform the said deformable member (93) in order to prevent the return of the first beam end (43A) from its locking position to its preliminary position, with respect to the front face (7).

10. Method of assembling a front-unit assembly according to any one of claims 1 to 6 and mounting such a front-unit assembly on a motor vehicle body, in which the following steps are performed successively:
- each optical unit (21) in mounted on the respective beam (43);
- each beam (43) is pre-positioned at its first end (43A) on the front face (6) and the bumper skin (19) is fixed to the assembly thus obtained;
- the front-unit assembly thus obtained is mounted on the vehicle body, and each beam (43) is fixed by its second end (43B) to the respective front wing part (5);
- one or more of the adjustment plates (101) according to any one of claims 7 to 9 are mounted on the internal face of the bonnet (6);
- the bonnet (6) is closed so as to cause a possible movement of the first end (43A) with respect to the front face (7) and thus an adjustment of the position of the optical unit (21) and of the bumper skin (19) with respect to the bonnet (6);
- the bonnet (6) is opened;
- the first end (43A) of each beam (43) is locked in position with respect to the front face (7); and
- the adjustment plate or plates (101) are removed.

## Patentansprüche

1. Frontmodul eines Kraftfahrzeugs, aufweisend: eine Vorderseite (7), die einen zentralen Abschnitt (9) und zwei laterale Abschnitte (11) aufweist, eine Stoßfängerschale (19), zwei flexible Träger (43), die sich lateral erstrecken und die Halter der Stoßfängerschale (19) bilden, von denen jeder ein erstes Ende (43A), welches mit dem zentralen Abschnitt (9) verbunden ist, und ein zweites Ende (43B), welches zur Verbindung mit einem vorderen Abschnitt (5) eines Kotflügels der Karosserie des Fahrzeugs vorgesehen ist, aufweist, und zwei Beleuchtungseinheiten (21), von denen jede starr an einem jeweiligen Träger (43) befestigt ist,
**dadurch gekennzeichnet, dass** das erste Ende (43A) des Trägers mit dem zentralen Abschnitt (9) mit dazwischen liegenden Mitteln (60, 65) zur Vorpositionierung und Verriegelung verbunden ist, welche einerseits zur Sicherstellung einer Vorpositionierung angepasst sind, die eine im Wesentlichen axiale (X) Verschiebung des ersten Endes (43A) in Bezug auf die Vorderseite (7) ermöglichen, und welche andererseits zur Sicherstellung einer Positionsverriegelung des ersten Endes (43A) in Bezug auf die Vorderseite (7) angepasst sind,
und dass der Träger (43) Mittel (85) zur Verschiebung aufweist, welche zum Zusammenwirken mit komplementären Mitteln (105) zur Verschiebung geeignet sind, die auf einem Abschnitt der Motorhaube (6) des Fahrzeugs der Gestalt vorgesehen sind, dass, wenn das erste Ende (43A) vorpositioniert aber noch nicht in Position verriegelt ist, eine Schließbewegung der Motorhaube (6) eine Verschiebung des ersten Endes (43A) in Bezug auf die Vorderseite (7) und auf diese Weise eine Justierung der Position der Beleuchtungseinheit (21) und der Stoßfängerschale (19) in Bezug auf die Motorhaube (6) bewirkt.

2. Frontmodul nach Anspruch 1, **dadurch gekennzeichnet, dass** die Mittel (60, 65) zur Vorpositionierung und Verriegelung eine rohrförmige Hülse (60), welche mit der Vorderseite (7) fest verbunden ist, und einen komplementären koaxialen Zapfen (65), der auf dem Träger (43) vorgesehen und zum axialen (X) Gleiten in der Hülse (60) geeignet ist, aufweisen.

3. Frontmodul, nach Anspruch 2, **dadurch gekennzeichnet, dass** die Mittel (60, 65) zur Vorpositionierung und Verriegelung eine Anschlagwand (75), die radial von der Hülse (60) hervorsteht, und eine Anschlagwand (85), die radial von dem Zapfen (65) hervorsteht, aufweisen, wobei diese zusammenwirken können, um den Eingriff des Zapfens (65) in der Hülse (60) zu begrenzen und die Vorposition des ersten Endes (43A) des Trägers in Bezug auf die Vorderseite (7) festzulegen.

4. Frontmodul nach Anspruch 3, **dadurch gekennzeichnet, dass** die radiale Anschlagwand (85) des Zapfens (65) eine Nockenfläche (97) aufweist, welche zur Zusammenwirkung mit einem mit der Motorhaube (6) verbundenen Stößel (105) der Gestalt geeignet ist, dass die Wand (85) die Einrichtungen zur Verschiebung des Trägers (43) bildet.

5. Frontmodul nach Anspruch 3 oder 4, **dadurch gekennzeichnet, dass** die Mittel (60, 65) zur Vorpositionierung und Verriegelung ein deformierbares Bauteil (93) aufweisen, ein solches wie ein Blind- bzw. Spreizniet mit einem plastisch deformierbaren Kragen, welches dazu geeignet ist, ein axiales (X) Gleiten des Zapfen (65) in der Hülse (65) zu ermöglichen, und sich unter der Einwirkung einer korrespondierenden Auflagestütze (103) der Motorhaube (6) während des Schließens dieser Letzteren zu verformen, um auf diese Art und Weise die Rückkehr des ersten Endes (43A) in die Vorposition in Bezug auf die Vorderseite (7) zu verhindern.

6. Frontmodul nach einem der Ansprüche 2 bis 5, **dadurch gekennzeichnet, dass** die Mittel (60, 65) zur Vorpositionierung und Verriegelung ein starres Befestigungsbauteil (90, 91) des Zapfens (65) in der Hülse (60) aufweisen, eine solches wie eine Schrauben-/Mutterngruppe, wobei die Positionsverriegelung des Zapfens (65) des ersten Endes (43A) des Trägers in Bezug auf die Vorderseite (7) sicherstellbar ist.

7. Platine (101) zur Justierung der Position einer Beleuchtungseinheit und einer Stoßfängerschale eines Frontmoduls nach einem der Ansprüche 1 bis 6, welche zur Befestigung an einem Abschnitt (6) der Motorhaube des Fahrzeugs vorgesehen ist, **dadurch gekennzeichnet, dass** sie Mittel (105) zur Verschiebung aufweist, welche komplementär zu den Mitteln (85) zur Verschiebung sind, die auf dem Träger (43) des Frontmoduls (3) vorgesehen sind.

8. Platine nach Anspruch 7, **dadurch gekennzeichnet, dass** sie lösbare Mittel zur Befestigung an der Motorhaube (6) aufweist.

9. Platine nach Anspruch 7 oder 8, **dadurch gekennzeichnet, dass** Auflagestützmittel (103) aufweist, die zur Zusammenwirkung mit einem deformierbaren Bauteil (93) der Mittel (60, 65) zur Vorpositionierung und Verriegelung des Frontmoduls während des Schließens der Motorhaube (6) vorgesehen sind, und zur Deformation des deformierbaren Bauteils (93) vorgesehen sind, um die Rückkehr des ersten Endes (43A) des Trägers aus seiner Verriegelungspositon in seine Vorposition in Bezug auf die Vorderseite (7) zu verhindern.

10. Verfahren zum Zusammenbauen eines Frontmoduls nach einem der Ansprüche 1 bis 6 und zum Montieren eines solchen Frontmoduls auf einem Wagenkasten eines Kraftfahrzeugs, bei welchem die folgenden Verfahrensschritte nacheinander ausgeführt werden:
- Anbauen jeder Beleuchtungseinheit (21) an den jeweiligen Träger (43);
- Vorpositionieren jedes Trägers (43) auf der Höhe seines ersten Endes (43A) auf der Vorderseite (7) und Befestigen der Stoßfängerschale (19) an dem so erhaltenen Modul;
- Anbauen des so erhaltenen Frontmoduls an dem Wagenkasten des Fahrzeugs und Befestigen eines jeden Trägers (43) über sein zweites Ende (43B) an dem vorderen Abschnitt eines jeweiligen Kotflügels (5);
- Anbauen einer oder mehrerer Platinen (101) zur Einstellung nach einem der Ansprüche 7 bis 9 an der inneren Seite der Motorhaube (6);
- Schließen der Motorhaube (6) in einer solchen Weise, dass eine mögliche Verschiebung des ersten Endes (43A) in Bezug auf die Vorderseite (7) und auf diese Art und Weise eine Justierung der Position der Beleuchtungseinheit (21) und der Stoßfängerschale (19) in Bezug auf die Motorhaube (6) bewirkt wird;
- Öffnen der Motorhaube (6);
- Feststellen der Position des ersten Endes (43A) eines jeden Trägers (43) in Bezug auf die Vorderseite (7); und
- Abbauen der Platine(n) zur Einstellung (101).
